# EUROPÄISCHE PATENTSCHRIFT

(11) **EP 3 988 480 B1**
(45) Veröffentlichungstag und Bekanntmachung des Hinweises auf die Patenterteilung: **18.01.2023**
(21) Anmeldenummer: 20202823.9
(22) Anmeldetag: 20.10.2020
(51) Int. Cl.: B65G 23/44, F16H 7/08

(54) **RIEMENSPANNER FÜR EIN FÖRDERBAND**
BELT TENSIONER FOR A CONVEYOR BELT
TENDEUR DE COURROIE POUR UNE BANDE TRANSPORTEUSE

(43) Veröffentlichungstag der Anmeldung: 27.04.2022
(73) Patentinhaber: Bizerba SE & Co. KG, 72336 Balingen (DE)
(72) Erfinder: Wehrmann, Johann, 72336 Balingen (DE)
(74) Vertreter: Manitz Finsterwald Patent- und Rechtsanwaltspartnerschaft mbB

(56) Entgegenhaltungen:
- DE-A1-102005 039 737
- DE-U1- 20 020 350
- DE-U1-202015 104 860
- US-A1- 2006 217 223
- US-B1- 6 599 209

## Beschreibung

Die Erfindung betrifft einen Riemenspanner zur Einstellung und Aufrechterhaltung einer vorgegebenen Spannung eines Treibriemens zum Antreiben einer Umlenkrolle eines Förderbands, insbesondere einer Wäge-Fördervorrichtung für Waren, insbesondere eines Preisauszeichners.

Ein Förderband umfasst üblicherweise einen Bandkörper mit zwei Umlenkrollen, um die ein Transportgurt des Förderbands umläuft. Dabei wird eine der beiden Umlenkrollen, die auch als Antriebsrolle bezeichnet wird, motorisch angetrieben und die andere Umlenkrolle läuft mit. Es ist auch bekannt, dass bei zwei z.B. unmittelbar hintereinander angeordneten Förderbändern nur ein Motor für beide Förderbänder verwendet wird. Dann wird die Antriebsrolle des einen Förderbands direkt von dem Motor angetrieben und eine Umlenkrolle des anderen Förderbands wird über einen Treibriemen von der Antriebsrolle des einen Förderbands angetrieben.

Um dabei eine ausreichend große Umschließung der antreibenden Umlenkrolle und der angetriebenen Umlenkrolle zu gewährleisten und die korrekte Riemenspannung einzustellen, kommen Riemenspanner zum Einsatz. Dabei sind Riemenspanner bekannt, die verschiebbar an einem Träger montiert sind und als Ganzes gegenüber dem Treibriemen verschoben werden, um den Treibriemen zu spannen. Darüber hinaus sind mehrteilige Riemenspanner bekannt, die unverschiebbar an dem Träger montiert sind, wobei jedoch eine Relativstellung zwischen dem Teil, das gegen den Treibriemen drückt und dem Teil, über das der Riemenspanner an dem Träger montiert ist, fest einstellbar ist. Bei beiden bekannten Arten von Riemenspannern wird zur Einstellung der gewünschten Riemenspannung iterativ vorgegangen, d.h. der Riemenspanner wird zunächst grob eingestellt und danach wird die Riemenspannung gemessen. Dann wird nachjustiert und erneut gemessen. Es wird dabei so lange nachjustiert, bis die Riemenspannung der gewünschten bzw. vorgegebenen Riemenspannung entspricht. Ein derartiges Vorgehen ist jedoch umständlich. Das Dokument US 6 599 209 B1 offenbart einen Riemenspanner geeignet zur Einstellung und Aufrechterhaltung einer vorgegebenen Spannung eines Treibriemens zum Antreiben einer Umlenkrolle eines Förderbands, mit einem einstückigen, insbesondere spiegelsymmetrisch zu einer Mittenebene ausgebildeten, Kunststoffkörper umfassend einen Befestigungsabschnitt, insbesondere mit einer Grundplatte, zur Befestigung des Kunststoffkörpers an einem Träger, insbesondere einem Förderbandträger,einen Andrückabschnitt, insbesondere mit einer Rückwand, der dazu ausgebildet ist, gegen den Treibriemen zu drücken, um den Treibriemen zu spannen, und eine den Befestigungsabschnitt und den Andrückabschnitt miteinander verbindende, entlang einer Auslenkrichtung elastisch nachgiebige Federgelenkeinrichtung.

Der Erfindung liegt die Aufgabe zugrunde, einen Riemenspanner der eingangs genannten Art anzugeben, bei dem die vorgegebene Riemenspannung einfach einstellbar ist.

Diese Aufgabe wird durch die Merkmale des Anspruchs 1 gelöst, und insbesondere dadurch, dass der Riemenspanner einen einstückigen, insbesondere spiegelsymmetrisch zu einer Mittenebene ausgebildeten, Kunststoffkörper aufweist. Der Kunststoffkörper umfasst einen Befestigungsabschnitt, insbesondere mit einer Grundplatte, zur Befestigung des Kunststoffkörpers an einem Träger, insbesondere Förderbandträger, wobei der Befestigungsabschnitt einen Verstellmechanismus aufweist, über den der Kunststoffkörper verstellbar, insbesondere höhenverstellbar, an dem Träger befestigbar ist, einen Andrückabschnitt, insbesondere mit einer Rückwand, der dazu ausgebildet ist, gegen den Treibriemen zu drücken, um den Treibriemen zu spannen, und eine den Befestigungsabschnitt und den Andrückabschnitt miteinander verbindende, entlang einer Auslenkrichtung elastisch nachgiebige Federgelenkeinrichtung, über die der Andrückabschnitt an dem Befestigungsabschnitt entlang der Auslenkrichtung verschiebbar gelagert ist, so dass, wenn der Andrückabschnitt gegen den Treibriemen drückt, der Betrag der Verschiebung des Andrückabschnitts entlang der Auslenkrichtung von der jeweiligen eingestellten Treibriemen-Spannung abhängig ist, wobei der Riemenspanner eine Einstellhilfe aufweist, die anzeigt, wenn durch den Riemenspanner die vorgegebene Treibriemen-Spannung eingestellt ist. Bei dem Träger kann es sich um einen Träger eines Gestells der eingangs genannten Wäge-Fördervorrichtung für Waren, insbesondere einen Förderbandträger, handeln.

Erfindungsgemäß kann aus dem Betrag der Verschiebung des Andrückabschnitts gegenüber dem Befestigungsabschnitt, d.h. aus dem Wert, wie weit der Andrückabschnitt beim Spannen des Treibriemens gegenüber dem Befestigungsabschnitt verschoben wird, auf die jeweilige eingestellte Treibriemen-Spannung rückgeschlossen werden. Die gewünschte bzw. vorgegebene Spannung geht daher mit einer definierten Relativposition zwischen dem Andrückabschnitt und dem Befestigungsabschnitt einher. Zum Einstellen der vorgegebenen Treibriemen-Spannung wird dann bei gegen den Triebriemen drückendem Andrückabschnitt der Befestigungsabschnitt über den Verstellmechanismus so weit verstellt, bis die definierte Relativposition zwischen dem Andrückabschnitt und dem Befestigungsabschnitt erreicht ist, wobei dann automatisch die vorgegebene Treibriemen-Spannung eingestellt ist. Die eingebaute Einstellhilfe zeigt dabei an, wenn die definierte Relativposition erreicht ist. Die vorgegebene Riemenspannung ist daher besonders einfach einstellbar.

Dadurch, dass der Befestigungsabschnitt, der Andrückabschnitt und die Federgelenkeinrichtung als einstückiger Kunststoffkörper ausgebildet sind, kann auf ein Messen bzw. Prüfen der Treibriemen-Spannung verzichtet werden, da ein derartiger Kunststoffkörper mit hoher Genauigkeit gefertigt werden kann, so dass gewährleistet werden kann, dass bei der definierten Relativposition die damit eingestellte Treibriemen-Spannung immer innerhalb der zulässigen Toleranzgrenzen für die vorgegebenen Treibriemen-Spannung liegt.

Der erfindungsgemäße Riemenspanner verwendet Teilaspekte von beiden aus dem Stand der Technik bekannten Arten von Riemenspannern. Von der ersten Art wird die verstellbare Befestigung des Riemenspanner an dem Träger übernommen, von der zweiten Art die In-Sich-Verstellbarkeit des Riemenspanners. Diese Kombination alleine bringt gegenüber dem Stand der Technik jedoch keinerlei Vorteile. Erst dadurch, dass nicht gleichzeitig auch die feste Einstellbarkeit und die mehrteilige Ausbildung von der zweiten Art übernommen wird, sondern dass stattdessen eine elastisch nachgiebige Federgelenkeinrichtung verwendet wird, die darüber hinaus zusammen mit einem Befestigungs- und einem Andrückabschnitt als einstückiger Kunststoffkörper ausgebildet ist, kann auf das Messen bzw. Prüfen der Treibriemen-Spannung verzichtet werden, und erst deshalb macht die Kombination der vorgenannten Teilaspekte der beiden aus dem Stand der Technik bekannten Arten von Riemenspannern überhaupt Sinn.

Bevorzugt umfasst der Verstellmechanismus eine Langlochanordnung, wobei der Kunststoffkörper über die Langlochanordnung und wenigstens eine darin einsetzbare Befestigungsschraube linear versetzbar an dem Träger befestigbar ist. Durch eine Langlochanordnung kann die Verstellbarkeit des Riemenspanners und damit die Einstellung der Spannung des Treibriemens auf einfache Weise erreicht werden.

Die Langlochanordnung kann wenigstens zwei, insbesondere genau zwei, Langlöcher umfassen, die parallel zueinander verlaufen. Dabei ist es bevorzugt, wenn die beiden Langlöcher in der Grundplatte des Befestigungsabschnitts ausgebildet sind. Durch mehrere parallel zueinander verlaufende Langlöcher kann die lineare Versetzbarkeit des Riemenspanners auf einfache Weise gewährleistet werden. Insbesondere sind die Langlöcher parallel zu der Auslenkrichtung orientiert, wodurch eine Querbelastung der Federgelenkeinrichtung beim Verstellen vermieden werden kann.

Vorzugsweise ist die Einstellhilfe derart ausgebildet, dass der Befestigungsabschnitt und der Andrückabschnitt jeweils ein linienförmiges Oberflächenmerkmal, beispielsweise eine Kante, aufweisen, wobei die beiden linienförmigen Oberflächenmerkmale bei der vorgegebenen Treibriemen-Spannung miteinander fluchten. Anhand der beiden miteinander fluchtenden linienförmigen Oberflächenmerkmale kann die vorgegebene Treibriemen-Spannung dann einfach abgelesen werden.

Insbesondere kann vorgesehen sein, dass die Federgelenkeinrichtung in einer Richtung senkrecht zur Grundplatte des Befestigungsabschnitts eine elastische Nachgiebigkeit besitzt, die höchstens 5%, insbesondere höchstens 1%, der elastischen Nachgiebigkeit der Federgelenkeinrichtung in Auslenkeinrichtung beträgt. Hierdurch kann ein etwaiges Verschieben des Andrückabschnitts in Richtung auf die Grundplatte zu oder von der Grundplatte weg zumindest weitestgehend verhindert werden.

Ferner ist es bevorzugt, wenn die Federgelenkeinrichtung zwei Federgelenkbereiche, der Befestigungsabschnitt zwei von der Grundplatte vorstehende, insbesondere L-förmige, Stützstege und der Andrückabschnitt zwei in gleicher Richtung wie die Stützstege von der Rückwand des Andrückabschnitts vorstehende, zwischen den beiden Stützstegen angeordnete Stützwände aufweist, wobei der eine Federgelenkbereich zwischen dem einen Stützsteg und der einen Stützwand und der andere Federgelenkbereich zwischen dem anderen Stützsteg und der anderen Stützwand ausgebildet ist. Der Andrückabschnitt ist damit nicht nur an einer Stelle, sondern an zwei einander gegenüberliegenden Seiten federelastisch gelagert, wodurch mehr Flexibilität bei der Gestaltung der Federgelenkeinrichtung in geometrischer Hinsicht entsteht. Darüber hinaus kann hierdurch eine Symmetrie erreicht werden, die eine besonders genaue Einstellung der vorgegebenen Treibriemen-Spannung erlaubt.

Die beiden Federgelenkbereiche können jeweils einen mäanderförmig verlaufenden Steg aufweisen, wobei das eine Ende des jeweiligen Stegs an dem jeweiligen Stützsteg und das andere Ende des jeweiligen Stegs an der jeweiligen Stützwand angeformt ist. Derartige mäanderförmig verlaufende Stege haben sich als besonders geeignet erwiesen, die gewünschten elastisch nachgiebigen Eigenschaften der Federgelenkeinrichtung zu verwirklichen.

Die beiden mäanderförmig verlaufenden Stege können jeweils eine Tiefe senkrecht zur Grundplatte des Befestigungsabschnitts und eine Höhe in Richtung der Auslenkrichtung aufweisen, wobei das Verhältnis von Tiefe zu Höhe wenigstens 1,0, insbesondere wenigstens 1,5, beträgt. Mit dieser Geometrie der mäanderförmig verlaufenden Stege kann die Auslenkrichtung gut definiert und insbesondere ein etwaiges Verschieben des Andrückabschnitts in Richtung auf die Grundplatte zu oder von der Grundplatte weg, wie es vorstehend erwähnt ist, zumindest weitestgehend verhindert werden.

Grundsätzlich kann der Andrückabschnitt dazu ausgebildet sein, unmittelbar oder mittelbar gegen den Triebriemen zu drücken. Bei der unmittelbaren Variante gleitet der Treibriemen über den Andrückabschnitt, was - insbesondere abhängig von dem verwendeten Treibriemen - unter Umständen jedoch zu einem unruhigeren Lauf und zu einem erhöhten Verschleiß des Treibriemens führen könnte. Daher ist es gemäß einer bevorzugten Ausführungsform vorgesehen, dass der Riemenspanner ein Rad umfasst, das drehbar an dem Andrückabschnitt des Kunststoffkörpers gelagert ist, wobei der Andrückabschnitt dazu ausgebildet ist, mittelbar über das Rad gegen den Treibriemen zu drücken, um den Treibriemen zu spannen. Es ist dabei bevorzugt, wenn das Rad als ein Zahnrad ausgebildet ist und der Treibriemen als ein Zahnriemen ausgebildet ist, wodurch ein besonders definiertes Zusammenwirken zwischen Rad und Treibriemen gewährleistet werden kann. Grundsätzlich kann das Rad scheibenförmig oder zylinderförmig ausgebildet sein.

Hierzu kann der Andrückabschnitt einen feststehenden Achsstumpf umfassen, auf den das Rad, insbesondere über ein Kugellager, drehbar aufgesetzt ist, wobei das Rad mittels einer Schraube gehalten ist, die sich durch einen in dem Achsstumpf ausgebildeten Durchgang hindurch erstreckt und in eine Schraubenmutter eingreift. Die Schraubenmutter kann in eine in der Rückwand des Andrückabschnitts ausgebildete Aussparung, in die der Durchgang übergeht, verdrehsicher eingesetzt sein oder hinter der Rückwand angeordnet und durch die Schraube verdrehsicher gegen die Rückwand gezogen sein. Dabei kann vorgesehen sein, dass in der Grundplatte eine Ausnehmung ausgebildet ist, durch die die Schraubenmutter in die in der Rückwand des Andrückabschnitts ausgebildete Aussparung einsetzbar oder hinter der Rückwand anordenbar ist. Hierbei handelt es sich um eine einfache und kostengünstige Möglichkeit, das Rad mit dem Andrückabschnitt bzw. dem Kunststoffkörper zu verbinden.

Vorzugsweise ist der Kunststoffkörper aus einem Material, das ein isotropes E-Modul, das auch als Elastizitätsmodul bezeichnet wird, besitzt, hergestellt. Das elastische Verhalten des Kunststoffkörpers ist dann in allen Raumrichtungen gleich. Bei der Herstellung des Kunststoffkörpers muss daher nicht auf die Raumrichtungen geachtet werden, da der Elastizitätsmodul der Federgelenkeinrichtung in Auslenkrichtung des Andrückabschnitts dann immer gleich ist. Grundsätzlich kann auch ein Kunststoffkörper mit einem anisotropen E-Modul verwendet werden. Allerdings muss dann bei der Herstellung wiederholbar immer dieselbe Anisotropie vorliegen und beim Einbau des Riemenspanners muss auf eine exakte Einbaulage geachtet werden. Beispielsweise kann der Kunststoffkörper aus einem Polyamid, insbesondere PE12, hergestellt sein.

Darüber hinaus ist es bevorzugt, wenn der Kunststoffkörper mittels eines 3-D-Druckverfahrens hergestellt ist. Durch ein 3-D-Druckverfahren kann der Kunststoffkörper mit hoher Güte, wie es aufgrund des vorstehend beschriebenen Verzichts auf ein Messen bzw. Prüfen der Treibriemen-Spannung bevorzugt ist, und gleichzeitig kostengünstig hergestellt werden. Wird der Kunststoffkörper aus einem Material mit einem isotropen E-Modul gedruckt, kann - relativ gesehen - der Kunststoffkörper auch schräg bzw. aus beliebiger Richtung gedruckt werden, so dass nicht auf eine exakte Einbaulage geachtet werden muss. Außerdem sind mit einem 3-D-Druckverfahren komplexere Geometrien herstellbar als mit einem Spritzgussverfahren. Insbesondere kann es sich bei dem 3-D-Druckverfahren um ein pulverbettbasiertes 3-D-Druckverfahren handeln, bei dem das Werkstück Schicht für Schicht aufgebaut wird. Neben dem selektiven Lasersintern, bei dem der pulverförmige Werkstoff mittels Laserstrahlung lokal gesintert und verschmolzen wird, kann ein Verfahren zum Einsatz kommen, bei dem zunächst ein wärmleitendes flüssiges Bindemittel (Fusion Agent) selektiv auf die jeweilige Pulverschicht und - um scharfe Konturen zu ermöglichen - im übrigen Bereich ein wärmehemmender flüssiger Trenner (Detailing Agent) aufgespritzt werden und anschließend die jeweilige Schicht mit einer Wärmequelle, insbesondere Infrarotlicht, bestrahlt wird, wobei die Bereiche mit dem Bindemittel verschmolzen werden. Dieses Verfahren ist von der Firma Hewlett Packard Inc. unter dem Namen Multi Jet Fusion bekannt. Dieses Verfahren ermöglicht, insbesondere auch bei frei schwebenden Strukturen, feine Details und scharfe Kanten.

Die Erfindung betrifft weiterhin ein Förderband mit einem Treibriemen zum Antreiben einer Umlenkrolle des Förderbands und einem Riemenspanner, wie er vorstehend beschrieben ist. Insbesondere ist der Riemenspanner auf die vorgegebene Treibriemen-Spannung eingestellt.

Die Erfindung betrifft ferner eine Wäge-Fördervorrichtung für Waren, insbesondere für Verpackungen, insbesondere Preisauszeichner, mit einem Förderband, wie es vorstehend beschrieben ist.

Weitere vorteilhafte Ausgestaltungen der Erfindung sind in den Unteransprüchen, der Figurenbeschreibung und der Zeichnung beschrieben.

Die Erfindung wird im Folgenden beispielhaft unter Bezugnahme auf die Zeichnung beschrieben. Es zeigen,
- Fig. 1: eine perspektivische Darstellung einer Wäge-Fördervorrichtung mit einer Etikettiervorrichtung, die zwei Förderbänder, jeweils mit einem Transportgurt, aufweist,
- Fig. 2: eine Draufsicht auf die beiden Förderbänder gemäß Fig. 1, wobei die beiden Transportgurte weggelassen sind,
- Fig. 3: eine Teildarstellung der beiden Förderbänder gemäß Fig. 1 in einer perspektivischen Ansicht, wobei weitere Teile weggelassen sind,
- Fig. 4: die Teildarstellung gemäß Fig. 3 in einer Seitenansicht,
- Fig. 5: einen erfindungsgemäßen Riemenspanner in einer Seitenansicht,
- Fig. 6: den Riemenspanner gemäß Fig. 5 in einer perspektivischen Ansicht von oben,
- Fig. 7: den Riemenspanner gemäß Fig. 5 in einer perspektivischen Ansicht von unten,
- Fig. 8: einen Andrückabschnitt und eine Federgelenkeinrichtung des Riemenspanners gemäß Fig. 5 in einer Rückansicht, und
- Fig. 9: einen Befestigungsabschnitt des Riemenspanners gemäß Fig. 5 in einer Vorderansicht.

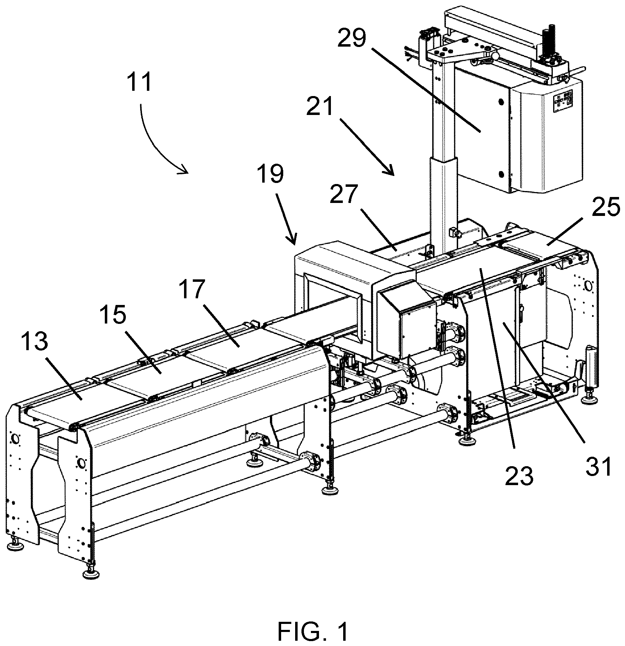

Die in Fig. 1 dargestellte Vorrichtung zeigt eine Wäge-Fördervorrichtung 11, insbesondere einen Preisauszeichner, die bzw. der ein Zuführband 13, ein Wägeband 15, ein Abführband 17, einen Metalldetektor 19 und eine Etikettiervorrichtung 21 mit zwei Förderbändern 23, 25 umfasst. Das Wägeband 15 ist mit einer unterhalb des Wägebands 15 angeordneten Wägezelle gekoppelt, die dazu ausgelegt ist, das Gewicht einer über das Wägeband 15 laufenden Ware, insbesondere einer Verpackung, zu bestimmen. Im Betrieb werden die zu verwiegende Waren von dem Zuführband 13 an das Wägeband 15 übergeben, dort gewogen und an ein Transportband des Metalldetektors 19 weitertransportiert. Anschließend werden die Waren von der Etikettiervorrichtung 21 übernommen und mit einem Etikett versehen, das zuvor mit dem von der Wägezelle für die jeweilige Ware ermittelten Gewicht bedruckt wurde. Bei der Etikettiervorrichtung 21 handelt es sich demnach um eine Etikettiervorrichtung einschließlich Drucker. Der Metalldetektor 19 kann auch weggelassen werden oder anstelle des Metalldetektors 19 oder zusätzlich hierzu kann auch beispielsweise eine Sortiereinrichtung vorgesehen sein. Im Bereich der Etikettiervorrichtung 21 ist in der Ansicht gemäß Fig. 1 an der Rückseite der Wäge-Fördervorrichtung 11 ein Schaltschrank 27 für die Steuerung der Wäge-Fördervorrichtung 11 vorgesehen.

Die Etikettiervorrichtung 11 umfasst einen sogenannten Top-Etikettierer 29 bzw. Etikettierer für die Packungsoberseite, der oberhalb der beiden Förderbänder 23, 25 angeordnet ist, um auf den Förderbändern 23, 25 transportierte Waren von oben, d.h. an deren Oberseite, mit einem Etikett zu versehen. Darüber hinaus umfasst die Etikettiervorrichtung 11 einen sogenannten Bottom-Etikettierer 31 bzw. Etikettierer für die Packungsunterseite, der unterhalb der beiden Förderbänder 23, 25 angeordnet ist, um auf den Förderbändern 23, 25 transportierte Waren von unten, d.h. an deren Unterseite, mit einem Etikett zu versehen. Hierzu wird das jeweilige Etikett von dem Bottom-Etikettierer 31 nach oben durch einen zwischen dem Förderband 23 und dem Förderband 25 ausgebildeten Spalt hindurch gespendet und auf die Waren appliziert.

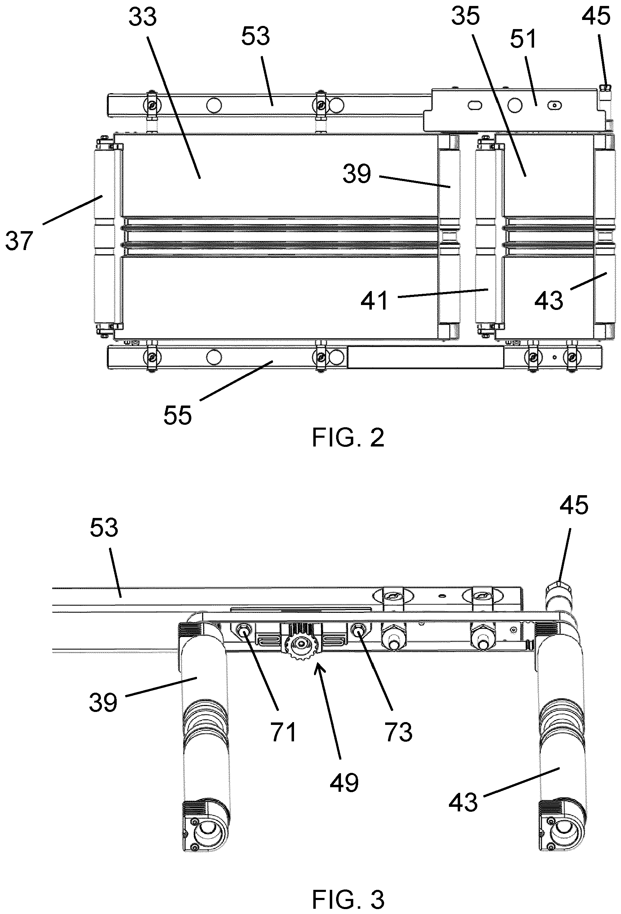

Fig. 2 zeigt die beiden Förderbänder 23, 25 in einer Draufsicht. Die beiden Förderbänder 23, 25 umfassen neben einem jeweiligen Transportgurt (der jeweils weggelassen ist) jeweils einen Bandkörper 33, 35 und zwei Umlenkrollen 37, 39, 41, 43. Die zweite Umlenkrolle 43 des zweiten Förderbands 25 wird über eine Kupplung 45 von einem Motor angetrieben, die erste Umlenkrolle 41 des zweiten Förderbands 25 läuft über den Transportgurt des zweiten Förderbands 25 mit. Das erste Förderband 23 besitzt hingegen keinen eigenen Motor, sondern wird über einen Treibriemen 47 (vgl. Fig. 3), der sich zwischen der angetriebenen zweiten Umlenkrolle 43 des zweiten Förderbands 25 und der zweiten Umlenkrolle 39 des ersten Förderbands 23 erstreckt, angetrieben. Der Treibriemen 47 verläuft dabei seitlich der Bandkörper 33, 35. Die erste Umlenkrolle 37 des ersten Förderbands 23 läuft über den Transportgurt des ersten Förderbands 23 mit.

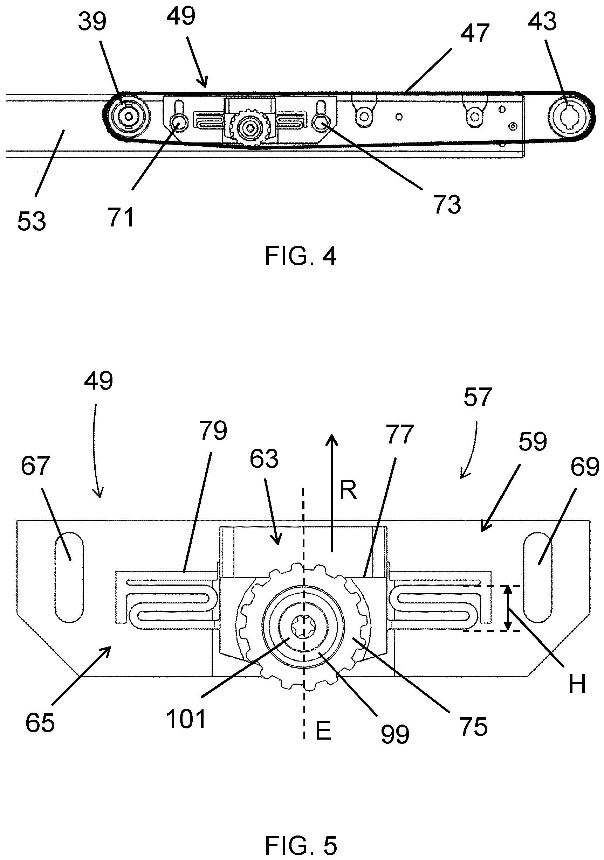

Um den Treibriemen 47 auf einer vorgegebenen Spannung zu halten, die für einen reibungslosen Betrieb erforderlich ist, ist ein Riemenspanner 49 vorgesehen, der in Fig. 2 durch ein Abdeckblech 51 verdeckt, in Fig. 3 (in der die beiden Bandkörper 33, 35 und die erste Umlenkrolle 41 des zweiten Förderbands 25 weggelassen sind) und Fig. 4 jedoch erkennbar ist. Der Riemenspanner 49 ist innerhalb des umlaufenden Treibriemens 47 angeordnet und drückt dabei von oben auf die Innenseite des Untertrums des Treibriemens 47, um den Treibriemen 47 zu spannen. Der Riemenspanner 49 ist dabei an einem seitlich der Bandkörper 33, 35 angeordneten Träger 53, insbesondere Förderbandträger 53, befestigt. Ein weiterer Träger, insbesondere Förderbandträger 55, ist auf der gegenüberliegenden Seite der Bandkörper 33, 35 vorgesehen, wobei die beiden Förderbänder 23, 25 durch die beiden Förderbandträger 53, 55 getragen werden und an diesen befestigt sind. Grundsätzlich kann jeder Bandkörper 33, 35 auf jeder Seite einen eigenen Förderbandträger besitzen, wobei der Treibriemen 47 für das erste Förderband 23 dann bevorzugt an dem einen der beiden Förderbandträger des zweiten Förderbands 25 befestigt ist.

In den Fig. 5 bis 7 ist der Riemenspanner 49 in Einzeldarstellung gezeigt. Der Riemenspanner umfasst einen einstückigen, spiegelsymmetrisch zu einer Mittenebene E ausgebildeten Kunststoffkörper 57, der einen Befestigungsabschnitt 59 mit einer Grundplatte 61, einen Andrückabschnitt 63 und eine elastisch nachgiebige Federgelenkeinrichtung 65, die den Befestigungsabschnitt 59 und den Andrückabschnitt 63 miteinander verbindet, aufweist. Über die Grundplatte 61 und zwei darin ausgebildete, parallele zueinander verlaufende Langlöcher 67, 69 ist der Riemenspanner 49 mit zwei Befestigungsschrauben 71, 73 (vgl. Fig. 3 und 4) an dem Förderbandträger 53 befestigt. An dem Andrückabschnitt 63 ist ein Rad, 75, insbesondere ein Zahnrad 75, des Riemenspanners 49 verdrehbar gelagert, das gegen den insbesondere entsprechend als Zahnriemen 47 ausgebildeten Treibriemen 47 drückt.

Der Andrückabschnitt 63 ist aufgrund der Federgelenkeinrichtung 65 relativ zu dem feststehenden Befestigungsabschnitt 59 entlang einer Auslenkrichtung R verschiebbar. Aufgrund der beiden sich in vertikaler Richtung erstreckenden Langlöcher 67, 69 ist der Riemenspanner 49 in vertikaler Richtung linear versetzbar und damit höhenverstellbar an dem Förderbandträger 53 befestigt. Die beiden in der Grundplatte 61 ausgebildeten Langlöcher 67, 69 stellen somit einen Verstellmechanismus für den Riemenspanner 49 dar, über den die vorgegebene Treibriemen-Spannung eingestellt werden kann.

In dem dargestellten Fall ist die Federkonstante der Federgelenkeinrichtung 65 derart gewählt, dass die vorgegebene Spannung des Treibriemens 47 genau dann erreicht ist, wenn eine Kante 77 des Andrückabschnitts 63 und eine Kante 79 des Befestigungsabschnitts 59, die ansonsten echt parallel zueinander verlaufen, miteinander fluchten. Das Erreichen der vorgegebenen Treibriemen-Spannung beim Verstellen des Befestigungsabschnitts 59 des Riemenspanners 49 kann daher direkt an dem Riemenspanner 49 abgelesen werden. Wird der Andrückabschnitt 63 um einen anderen Betrag gegenüber dem Befestigungsabschnitt 59 verschoben, weicht die eingestellte Riemenspannung von der vorgegebenen Riemenspannung - abhängig davon, ob die Kante 77 die Kante 79 nicht erreicht oder darüber hinaus verschoben wird - nach oben oder unten ab. Der Riemenspanner 49 bildet somit gewissermaßen seine eigene Einstellhilfe.

Konkret ist die Federlagerung des Andrückabschnitts 63 an dem Befestigungsabschnitt 59 in der dargestellten Ausführungsform derart realisiert, dass der Befestigungsabschnitt 59 zwei von der vertikal an dem Förderbandträger 53 befestigten Grundplatte 61 horizontal abstehende L-förmige Stützstege 81, 83 aufweist, und dass der Andrückabschnitt 63 eine vertikal orientierte Rückwand 93 und zwei in gleicher Richtung von der Rückwand 93 vorstehende Stützwände 85, 87 aufweist, die zwischen den beiden Stützstegen 81, 83 angeordnet sind. Entsprechend weist auch die Federgelenkeinrichtung 65 zwei Federgelenkbereiche 89, 91 auf, die zwischen einem jeweiligen Stützsteg 81, 83 und einer jeweiligen Stützwand 85, 87 ausgebildet sind.

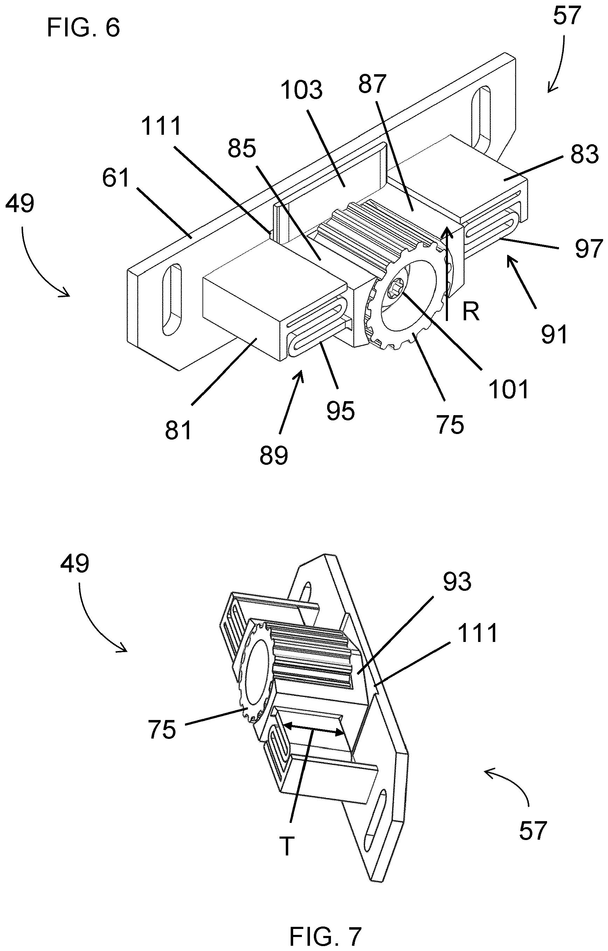

Wie sich aus den Fig. 5 bis 7 weiter ergibt, sind die beiden Federgelenkbereiche 89, 91 jeweils als ein mäanderförmig verlaufender Steg 95, 97 ausgebildet. Mit dem einen Ende ist der jeweilige Steg 95, 97 an einem vertikalen Schenkel des jeweiligen L-förmigen Stützstegs 81, 83 angeformt, und mit dem anderen Ende an einer vertikalen Außenfläche der jeweiligen Stützwand 85, 87. Das Verhältnis der Tiefe T (vgl. Fig. 7) zu der Höhe H (vgl. Fig. 5) der beiden mäanderförmig verlaufenden Stege 89, 91 beträgt in der dargestellten Ausführungsform etwa 1,9. Damit kann erreicht werden, dass die elastische Nachgiebigkeit der Federgelenkeinrichtung 65 in der Richtung senkrecht zur Grundplatte 61 relativ zu der elastischen Nachgiebigkeit in Auslenkrichtung R vernachlässigbar klein gehalten werden kann.

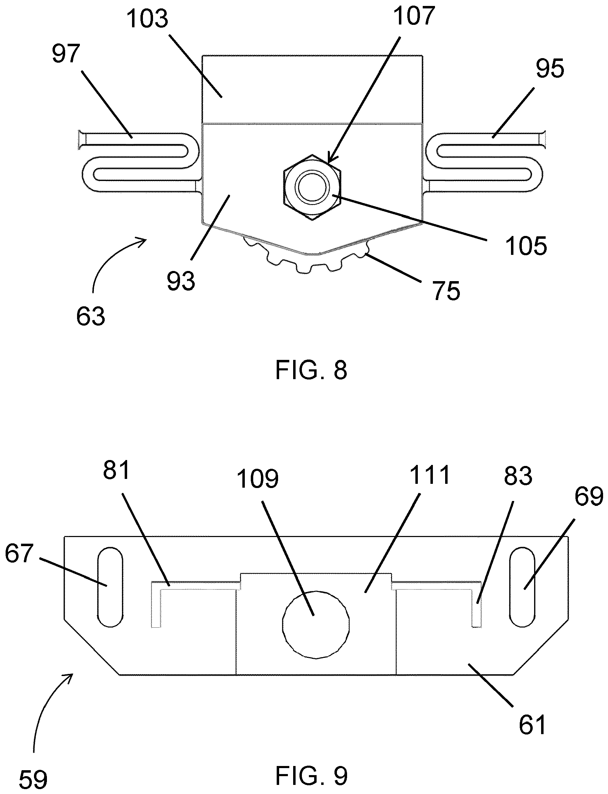

Zur drehbaren Lagerung des Zahnrads 75 an dem Andrückabschnitt 63 des Kunststoffkörpers 57 weist der Andrückabschnitt 63 einen feststehenden, nicht sichtbaren Achsstumpf auf (vgl. Fig. 5 und 6), auf den über ein Kugellager 99 das Zahnrad 75 aufgesetzt ist. Um das Zahnrad 75 an dem Achsstumpf zu halten, ist eine Schraube 101 vorgesehen, die sich durch einen in dem Achsstumpf ausgebildeten, nicht sichtbaren Durchgang hindurch erstreckt und mit ihrem Ende in eine Schraubenmutter 105 eingreift (vgl. Fig. 8). Die Schraubenmutter 105 ist in eine Aussparung 107, in die der Durchgang übergeht, verdrehsicher eingesetzt, wobei die Aussparung 107 in der Rückwand 93 des Andrückabschnitts 63 ausgebildet ist. Um die Schraubenmutter 105 in die Aussparung 107 einsetzen zu können, ist in der Grundplatte 61 eine entsprechend größere Ausnehmung 109 vorgesehen (vgl. Fig. 9). Ferner ist an der Oberseite der Rückwand 93 des Andrückabschnitts 63 ein Schild 103 angeformt, das ein oberes Ende einer Vertiefung 111 verdeckt, die in einer Vorderseite der Grundplatte 61 ausgebildet ist, damit sicher gewährleistet werden kann, dass der Andrückabschnitt 63 weder an der Grundplatte 61 anliegt noch daran schleift.

Der Kunststoffkörper 57 ist mittels eines 3-D-Druckverahrens aus dem Polyamid PE12, d.h. einem Material mit einem isotropen E-Modul, gefertigt, so dass der Kunststoffkörper 57 in allen Raumrichtungen dasselbe elastische Verhalten besitzt. Hierdurch werden insbesondere größere Toleranzen hinsichtlich der Einbaulage des Riemenspanners 49 möglich.

### Bezugszeichenliste

- 11: Wäge-Fördervorrichtung
- 13: Zuführband
- 15: Wägeband
- 17: Abführband
- 19: Metalldetektor
- 21: Etikettiervorrichtung
- 23: Förderband
- 25: Förderband
- 27: Schaltschrank
- 29: Top-Etikettierer
- 31: Bottom-Etikettierer
- 33: Bandkörper
- 35: Bandkörper
- 37: Umlenkrolle
- 39: Umlenkrolle
- 41: Umlenkrolle
- 43: Umlenkrolle
- 45: Kupplung
- 47: Treibriemen
- 49: Riemenspanner
- 51: Abdeckblech
- 53: Träger
- 55: Träger
- 57: Kunststoffkörper
- 59: Befestigungsabschnitt
- 61: Grundplatte
- 63: Andrückabschnitt
- 65: Federgelenkeinrichtung
- 67: Langloch
- 69: Langloch
- 71: Befestigungsschraube
- 73: Befestigungsschraube
- 75: Zahnrad
- 77: Kante
- 79: Kante
- 81: Stützsteg
- 83: Stützsteg
- 85: Stützwand
- 87: Stützwand
- 89: Federgelenkbereich
- 91: Federgelenkbereich
- 93: Rückwand
- 95: Steg
- 97: Steg
- 99: Kugellager
- 101: Schraube
- 103: Schild
- 105: Schraubenmutter
- 107: Aussparung
- 109: Ausnehmung
- 111: Vertiefung

- E: Mittenebene
- H: Höhe
- R: Auslenkrichtung
- T: Tiefe

## Patentansprüche

1. Riemenspanner zur Einstellung und Aufrechterhaltung einer vorgegebenen Spannung eines Treibriemens (47) zum Antreiben einer Umlenkrolle (39) eines Förderbands (23), mit einem einstückigen, insbesondere spiegelsymmetrisch zu einer Mittenebene (E) ausgebildeten, Kunststoffkörper (57) umfassend
einen Befestigungsabschnitt (59), insbesondere mit einer Grundplatte (61), zur Befestigung des Kunststoffkörpers (57) an einem Träger (53), insbesondere einem Förderbandträger (53), wobei der Befestigungsabschnitt (59) einen Verstellmechanismus (67, 69) aufweist, über den der Kunststoffkörper (57) verstellbar, insbesondere höhenverstellbar, an dem Träger (53) befestigbar ist,
einen Andrückabschnitt (63), insbesondere mit einer Rückwand (93), der dazu ausgebildet ist, gegen den Treibriemen (47) zu drücken, um den Treibriemen (47) zu spannen, und
eine den Befestigungsabschnitt (59) und den Andrückabschnitt (63) miteinander verbindende, entlang einer Auslenkrichtung (R) elastisch nachgiebige Federgelenkeinrichtung (65), über die der Andrückabschnitt (63) an dem Befestigungsabschnitt (59) entlang der Auslenkrichtung (R) verschiebbar gelagert ist, so dass, wenn der Andrückabschnitt (63) gegen den Treibriemen (47) drückt, der Betrag der Verschiebung des Andrückabschnitts (63) entlang der Auslenkrichtung (R) von der jeweiligen eingestellten Treibriemen-Spannung abhängig ist,
wobei der Riemenspanner (49) eine Einstellhilfe (77, 79) aufweist, die anzeigt, wenn durch den Riemenspanner (49) die vorgegebene Treibriemen-Spannung eingestellt ist.

2. Riemenspanner nach Anspruch 1,
**dadurch gekennzeichnet,**
**dass** der Verstellmechanismus (67, 69) eine Langlochanordnung (67, 69) umfasst, wobei der Kunststoffkörper (57) über die Langlochanordnung (67, 69) und wenigstens eine darin einsetzbare Befestigungsschraube (71, 73) linear versetzbar an dem Träger (53) befestigbar ist.

3. Riemenspanner nach Anspruch 2,
**dadurch gekennzeichnet,**
**dass** die Langlochanordnung (67, 69) wenigstens zwei, insbesondere genau zwei, Langlöcher (67, 69) umfasst, die parallel zueinander verlaufen, wobei bevorzugt die Langlöcher (67, 69) in der Grundplatte (61) des Befestigungsabschnitts (59) ausgebildet sind und/oder parallel zu der Auslenkrichtung (R) orientiert sind.

4. Riemenspanner nach einem der vorstehenden Ansprüche,
**dadurch gekennzeichnet,**
**dass** die Einstellhilfe (77, 79) derart ausgebildet ist, dass der Befestigungsabschnitt (59) und der Andrückabschnitt (63) jeweils ein linienförmiges Oberflächenmerkmal (77, 79), beispielsweise eine Kante (77, 79), aufweisen, wobei die beiden linienförmigen Oberflächenmerkmale (77, 79) bei der vorgegebenen Treibriemen-Spannung miteinander fluchten.

5. Riemenspanner nach einem der vorstehenden Ansprüche,
**dadurch gekennzeichnet,**
**dass** die Federgelenkeinrichtung (65) in einer Richtung senkrecht zur Grundplatte (61) des Befestigungsabschnitts (59) eine elastische Nachgiebigkeit besitzt, die höchstens 5%, insbesondere höchstens 1%, der elastischen Nachgiebigkeit der Federgelenkeinrichtung (65) in Auslenkeinrichtung (R) beträgt.

6. Riemenspanner nach einem der vorstehenden Ansprüche,
**dadurch gekennzeichnet,**
**dass** die Federgelenkeinrichtung (65) zwei Federgelenkbereiche (89, 91), der Befestigungsabschnitt (59) zwei von der Grundplatte (61) vorstehende, insbesondere L-förmige, Stützstege (81, 83) und der Andrückabschnitt (63) zwei in gleicher Richtung wie die Stützstege (81, 83) von der Rückwand (93) des Andrückabschnitts (63) vorstehende, zwischen den beiden Stützstegen (81, 83) angeordnete Stützwände (85, 87) aufweist, wobei der eine Federgelenkbereich (89) zwischen dem einen Stützsteg (81) und der einen Stützwand (85) und der andere Federgelenkbereich (91) zwischen dem anderen Stützsteg (83) und der anderen Stützwand (87) ausgebildet ist.

7. Riemenspanner nach Anspruch 6,
**dadurch gekennzeichnet,**
**dass** die beiden Federgelenkbereiche (89, 91) jeweils einen mäanderförmig verlaufenden Steg (95, 97) umfassen, wobei das eine Ende des jeweiligen Stegs (95, 97) an dem jeweiligen Stützsteg (81, 83) und das andere Ende des jeweiligen Stegs (95, 97) an der jeweiligen Stützwand (85, 87) angeformt ist.

8. Riemenspanner nach Anspruch 7,
**dadurch gekennzeichnet,**
**dass** die beiden mäanderförmig verlaufenden Stege (89, 91) jeweils eine Tiefe (T) senkrecht zur Grundplatte (61) des Befestigungsabschnitts (59) und eine Höhe (H) in Richtung der Auslenkrichtung (R) aufweisen, wobei das Verhältnis von Tiefe (T) zu Höhe (H) wenigstens 1,0, insbesondere wenigstens 1,5, beträgt.

9. Riemenspanner nach einem der vorstehenden Ansprüche,
**dadurch gekennzeichnet,**
**dass** der Riemenspanner (49) ein Rad (75) umfasst, das drehbar an dem Andrückabschnitt (63) des Kunststoffkörpers (57) gelagert ist, wobei der Andrückabschnitt (63) dazu ausgebildet ist, mittelbar über das Rad (75) gegen den Treibriemen (47) zu drücken, um den Treibriemen (47) zu spannen,
wobei bevorzugt das Rad (75) als ein Zahnrad (75) ausgebildet ist und der Treibriemen (47) als ein Zahnriemen (47) ausgebildet ist.

10. Riemenspanner nach Anspruch 9,
**dadurch gekennzeichnet,**
**dass** der Andrückabschnitt (63) einen feststehenden Achsstumpf umfasst, auf den das Rad (75), insbesondere über ein Kugellager (99), drehbar aufgesetzt ist, wobei das Rad (75) mittels einer Schraube (101) gehalten ist, die sich durch einen in dem Achsstumpf ausgebildeten Durchgang hindurch erstreckt und in eine Schraubenmutter (105) eingreift.

11. Riemenspanner nach Anspruch 10,
**dadurch gekennzeichnet,**
**dass** die Schraubenmutter (105) in eine in der Rückwand (93) des Andrückabschnitts (63) ausgebildete Aussparung (107), in die der Durchgang übergeht, verdrehsicher eingesetzt ist oder hinter der Rückwand (93) angeordnet und durch die Schraube (101) verdrehsicher gegen die Rückwand (93) gezogen ist,
wobei insbesondere vorgesehen ist, dass in der Grundplatte (61) eine Ausnehmung (109) ausgebildet ist, durch die die Schraubenmutter (105) in die in der Rückwand (93) des Andrückabschnitts (63) ausgebildete Aussparung (107) einsetzbar oder hinter der Rückwand (93) anordenbar ist.

12. Riemenspanner nach einem der vorstehenden Ansprüche,
**dadurch gekennzeichnet,**
**dass** der Kunststoffkörper (57) aus einem Material, das ein isotropes E-Modul besitzt, und/oder einem Polyamid, insbesondere PE12, hergestellt ist.

13. Riemenspanner nach einem der vorstehenden Ansprüche,
**dadurch gekennzeichnet,**
**dass** der Kunststoffkörper (57) mittels eines 3-D-Druckverfahrens hergestellt ist.

14. Förderband mit einem Treibriemen (47) zum Antreiben einer Umlenkrolle (39) des Förderbands (23) und einem Riemenspanner (49) nach einem der vorstehenden Ansprüche.

15. Wäge-Fördervorrichtung für Waren, insbesondere für Verpackungen, insbesondere Preisauszeichner, mit einem Förderband (23) nach Anspruch 14.

## Claims

1. A belt tensioner for setting and maintaining a predefined tension of a drive belt (47) for driving a deflection roller (39) of a conveyor belt (23), said belt tensioner having a single-piece plastic body (57), which is in particular formed with mirror symmetry to a central plane (E), comprising
a fastening section (59), in particular having a base plate (61), for fastening the plastic body (57) to a carrier (53), in particular to a conveyor belt carrier (53), wherein the fastening section (59) has an adjustment mechanism (67, 69) via which the plastic body (57) can be adjustably fastened, in particular vertically adjustably fastened, to the carrier (53);
a pressing section (63), in particular having a rear wall (93), which is configured to press against the drive belt (47) in order to tension the drive belt (47); and
a spring joint device (65) which connects the fastening section (59) and the pressing section (63) to one another, which is elastically yielding along a deflection direction (R), and via which the pressing section (63) is displaceably supported at the fastening section (59) along the deflection direction (R) so that, when the pressing section (63) presses against the drive belt (47), the amount of the displacement of the pressing section (63) along the deflection direction (R) is dependent on the respective set drive belt tension,
wherein the belt tensioner (49) has a setting aid (77, 79) which indicates when the predefined drive belt tension is set by the belt tensioner (49).

2. A belt tensioner in accordance with claim 1,
**characterized in that**
the adjustment mechanism (67, 69) comprises an elongate hole arrangement (67, 69), with the plastic body (57) being fastenable in a linearly displaceable manner to the carrier (53) via the elongate hole arrangement (67, 69) and at least one fastening screw (71, 73) which can be inserted therein.

3. A belt tensioner in accordance with claim 2,
**characterized in that**
the elongate hole arrangement (67, 69) comprises at least two elongate holes (67, 69), in particular exactly two elongate holes (67, 69), which extend in parallel with one another,
with preferably the elongate holes (67, 69) being formed in the base plate (61) of the fastening section (59) and/or being oriented in parallel with the deflection direction (R).

4. A belt tensioner in accordance with any one of the preceding claims, **characterized in that**
the setting aid (77, 79) is configured such that the fastening section (59) and the pressing section (63) each have a linear surface feature (77, 79), for example an edge (77, 79), with the two linear surface features (77, 79) being aligned with one another at the predefined drive belt tension.

5. A belt tensioner in accordance with any one of the preceding claims, **characterized in that**
the spring joint device (65) has an elastic yield in a direction perpendicular to the base plate (61) of the fastening section (59), said elastic yield amounting to at most 5%, in particular at most 1%, of the elastic yield of the spring joint device (65) in the deflection direction (R).

6. A belt tensioner in accordance with any one of the preceding claims, **characterized in that**
the spring joint device (65) has two spring joint regions (89, 91), the fastening section (59) has two support webs (81, 83), in particular L-shaped support webs (81, 82), projecting from the base plate (61) and the pressing section (63) has two support walls (85, 87) which project from the rear wall (93) of the pressing section (63) in the same direction as the support webs (81, 83) and which are arranged between the two support webs (81, 83), with the one spring joint region (89) being formed between the one support web (81) and the one support wall (85) and the other spring joint region (91) being formed between the other support web (83) and the other support wall (87).

7. A belt tensioner in accordance with claim 6,
**characterized in that**
the two spring joint regions (89, 91) each comprise a web (95, 97) extending in a meandering manner, with the one end of the respective web (95, 97) being molded to the respective support web (81, 83) and the other end of the respective web (95, 97) being molded to the respective support wall (85, 87).

8. A belt tensioner in accordance with claim 7,
**characterized in that**
the two webs (89, 91) extending in a meandering manner each have a depth (T) perpendicular to the base plate (61) of the fastening section (59) and a height (H) in the direction of the deflection direction (R), with the ratio of depth (T) to height (H) amounting to at least 1.0, in particular at least 1.5.

9. A belt tensioner in accordance with any one of the preceding claims, **characterized in that**
the belt tensioner (49) comprises a wheel (75) which is rotatably supported at the pressing section (63) of the plastic body (57), with the pressing section (63) being configured to press indirectly via the wheel (75) against the drive belt (47) in order to tension the drive belt (47),
with preferably the wheel (75) being configured as a toothed wheel (75) and the drive belt (47) being configured as a toothed belt (47).

10. A belt tensioner in accordance with claim 9,
**characterized in that**
the pressing section (63) comprises a fixed axle stub onto which the wheel (75) is rotatably placed, in particular via a ball bearing (99), with the wheel (75) being held by means of a screw (101) which extends through a passage formed in the axle stub and which engages into a screw nut (105).

11. A belt tensioner in accordance with claim 10,
**characterized in that**
the screw nut (105) is inserted in a manner secure against rotation into a cut-out (107), which is formed in the rear wall (93) of the pressing section (63) and into which the passage merges, or is arranged behind the rear wall (93) and is pulled in a manner secure against rotation against the rear wall (93) by the screw (101),
with provision in particular being made that a recess (109) is formed in the base plate (61), through which recess (109) the screw nut (105) can be inserted into the cut-out (107) formed in the rear wall (93) of the pressing section (63) or can be arranged behind the rear wall (93).

12. A belt tensioner in accordance with any one of the preceding claims, **characterized in that**
the plastic body (57) is produced from a material which has an isotropic modulus of elasticity and/or from a polyamide, in particular PE12.

13. A belt tensioner in accordance with any one of the preceding claims, **characterized in that**
the plastic body (57) is produced by means of a 3D printing process.

14. A conveyor belt comprising a drive belt (47) for driving a deflection roller (39) of the conveyor belt (23); and a belt tensioner (49) in accordance with any one of the preceding claims.

15. A weighing conveying apparatus for goods, in particular for packages, in particular a price labeler, comprising a conveyor belt (23) in accordance with claim 14.

## Revendications

1. Tendeur de courroie pour régler et maintenir une tension prédéfinie d'une courroie d'entraînement (47) destinée à entraîner une poulie de renvoi (39) d'une bande transporteuse (23), comportant un corps en matière plastique (57) d'une seule pièce, réalisé en particulier de manière symétrique par rapport à un plan médian (E) et comprenant
une portion de fixation (59), en particulier ayant une plaque de base (61), pour fixer le corps en matière plastique (57) sur un support (53), en particulier sur un support de bande transporteuse (53), la portion de fixation (59) présentant un mécanisme de réglage (67 ; 69) permettant de fixer le corps en matière plastique (57) de manière réglable, en particulier réglable en hauteur, sur le support (53),
une portion de pression (63), en particulier ayant une paroi arrière (93), qui est réalisée pour presser contre la courroie d'entraînement (47) afin de tendre la courroie d'entraînement (47), et
un dispositif d'articulation à ressort (65) reliant l'une à l'autre la portion de fixation (59) et la portion de pression (63) et pouvant céder élastiquement le long d'une direction de déviation (R), par l'intermédiaire duquel la portion de pression (63) est montée sur la portion de fixation (59) de façon mobile en translation le long de la direction de déviation (R), de sorte que, lorsque la portion de pression (63) presse contre la courroie d'entraînement (47), la valeur absolue de la translation de la portion de pression (63) le long de la direction de déviation (R) dépend de la tension respective réglée de la courroie d'entraînement,
dans lequel
le tendeur de courroie (49) comprend un organe d'aide au réglage (77, 79) qui indique quand la tension prédéfinie de la courroie d'entraînement est réglée par le tendeur de courroie (49).

2. Tendeur de courroie selon la revendication 1,
**caractérisé en ce que**
le mécanisme de réglage (67, 69) comprend un ensemble de trous oblongs (67, 69), le corps en matière plastique (57) pouvant être fixé sur le support (53) de manière à pouvoir être déplacé linéairement par l'intermédiaire de l'ensemble de trous oblongs (67, 69) et d'au moins une vis de fixation (71, 73) qui peut y être insérée.

3. Tendeur de courroie selon la revendication 2,
**caractérisé en ce que**
l'ensemble de trous oblongs (67, 69) comprend au moins deux, en particulier exactement deux, trous oblongs (67, 69) qui s'étendent parallèlement l'un à l'autre, de préférence les trous oblongs (67, 69) étant ménagés dans la plaque de base (61) de la portion de fixation (59) et/ou étant orientés parallèlement à la direction de déviation (R).

4. Tendeur de courroie selon l'une des revendications précédentes, **caractérisé en ce que**
l'organe d'aide au réglage (77, 79) est réalisé de telle sorte que la portion de fixation (59) et la portion de pression (63) présentent chacune une caractéristique de surface linéaire (77, 79), par exemple une arête (77, 79), les deux caractéristiques de surface linéaires (77, 79) étant alignées l'une avec l'autre lors de la tension prédéfinie de la courroie d'entraînement.

5. Tendeur de courroie selon l'une des revendications précédentes, **caractérisé en ce que**
le dispositif d'articulation à ressort (65) possède, dans une direction perpendiculaire à la plaque de base (61) de la portion de fixation (59), une souplesse élastique qui est au maximum égale à 5 %, en particulier au maximum égale à 1 %, de la souplesse élastique du dispositif d'articulation à ressort (65) dans la direction de déviation (R).

6. Tendeur de courroie selon l'une des revendications précédentes, **caractérisé en ce que**
le dispositif d'articulation à ressort (65) comporte deux zones d'articulation à ressort (89, 91), la portion de fixation (59) comporte deux barrettes de soutien (81, 83), en particulier en forme de L, qui dépassent de la plaque de base (61), et la portion de pression (63) comporte deux parois de soutien (85, 87) qui dépassent de la paroi arrière (93) de la portion de pression (63) dans la même direction que les barrettes de soutien (81, 83) et qui sont disposées entre les deux barrettes de soutien (81, 83), l'une des zones d'articulation à ressort (89) étant formée entre l'une des barrettes de soutien (81) et l'une des parois de soutien (85) et l'autre zone d'articulation à ressort (91) étant formée entre l'autre barrette de soutien (83) et l'autre paroi de soutien (87).

7. Tendeur de courroie selon la revendication 6,
**caractérisé en ce que**
les deux zones d'articulation à ressort (89, 91) comprennent chacune une barrette (95, 97) s'étendant en forme de méandres, l'une des extrémités de la barrette respective (95, 97) étant conformée sur la barrette de soutien respective (81, 83) et l'autre extrémité de la barrette respective (95, 97) étant conformée sur la paroi de soutien respective (85, 87).

8. Tendeur de courroie selon la revendication 7,
**caractérisé en ce que**
les deux barrettes (89, 91) s'étendant en forme de méandres présentent chacune une profondeur (T) perpendiculairement à la plaque de base (61) de la portion de fixation (59) et une hauteur (H) dans le sens de la direction de déviation (R), le rapport de la profondeur (T) sur la hauteur (H) étant d'au moins 1,0, en particulier d'au moins 1,5.

9. Tendeur de courroie selon l'une des revendications précédentes, **caractérisé en ce que**
le tendeur de courroie (49) comprend une roue (75) qui est montée de manière rotative sur la portion de pression (63) du corps en matière plastique (57), la portion de pression (63) étant réalisée pour presser contre la courroie d'entraînement (47) indirectement par l'intermédiaire de la roue (75) afin de tendre la courroie d'entraînement (47),
de préférence, la roue (75) étant réalisée sous forme de roue dentée (75) et la courroie d'entraînement (47) est réalisée sous forme de courroie dentée (47).

10. Tendeur de courroie selon la revendication 9,
**caractérisé en ce que**
la portion de pression (63) comprend un moignon d'axe fixe sur lequel la roue (75) est montée de manière rotative, en particulier par l'intermédiaire d'un roulement à billes (99), la roue (75) étant maintenue au moyen d'une vis (101) qui traverse un passage ménagé dans le moignon d'axe et qui s'engage dans un écrou (105).

11. Tendeur de courroie selon la revendication 10,
**caractérisé en ce que**
l'écrou (105) est inséré sans pouvoir tourner dans une échancrure (107) ménagée dans la paroi arrière (93) de la portion de pression (63), dans laquelle le passage se prolonge, ou est disposé derrière la paroi arrière (93) et est tiré contre la paroi arrière (93) par la vis (101) sans pouvoir tourner, il est en particulier prévu qu'un évidement (109) est ménagé dans la plaque de base (61), à travers lequel l'écrou (105) peut être inséré dans l'échancrure (107) ménagée dans la paroi arrière (93) de la portion de pression (63) ou peut être disposé derrière la paroi arrière (93).

12. Tendeur de courroie selon l'une des revendications précédentes, **caractérisé en ce que**
le corps en matière plastique (57) est fabriqué en un matériau qui possède un module d'élasticité isotrope et/ou en un polyamide, en particulier en PE12.

13. Tendeur de courroie selon l'une des revendications précédentes, **caractérisé en ce que**
le corps en matière plastique (57) est fabriqué au moyen d'un procédé d'impression 3D.

14. Bande transporteuse comprenant une courroie d'entraînement (47), destinée à entraîner une poulie de renvoi (39) de la bande transporteuse (23), et un tendeur de courroie (49) selon l'une des revendications précédentes.

15. Dispositif de pesage-transport de marchandises, en particulier d'emballages, en particulier d'étiquettes de prix, comprenant une bande transporteuse (23) selon la revendication 14.
